# EUROPEAN PATENT APPLICATION

(11) **EP 4 502 804 A1**
(43) Date of publication of application: **05.02.2025**
(21) Application number: 24189969.9
(22) Date of filing: 22.07.2024
(51) Int. Cl.: G06F 9/50, G06F 9/48

(54) **SLOW NODE DETECTION METHOD DURING TASK RUNNING, APPARATUS, ELECTRONIC DEVICE, AND MEDIUM**

(30) Priority: 04.08.2023 CN 202310982104
(71) Applicant: National University of Singapore, Singapore 119077 (SG); Beijing Volcano Engine Technology Co., Ltd., Beijing 100190 (CN)
(72) Inventor: ZHANG, Yifan, Beijing, 100028 (CN); CHEN, Zhanghao, Beijing, 100028 (CN); WANG, Meng, Beijing, 100028 (CN); ZHANG, Guanghui, Beijing, 100028 (CN); FANG, Yong, Beijing, 100028 (CN); SHI, Rui, Beijing, 100028 (CN); MA, Tianbai, 119077 Singapore (SG); MAO, Yancan, 119077 Singapore (SG)
(74) Representative: Dentons UK and Middle East LLP

(57) **Abstract**

A slow node detection method during task running, an apparatus, an electronic device, and a medium are provided. The method includes: obtaining running indicator information of a streaming data processing task, the streaming data processing task including sub-tasks of a plurality of operator types; determining a target operator type that is abnormal according to a topological relationship between respective operator types and abnormality reason information that is indicated by the running indicator information; filtering first sub-tasks of the target operator type from the sub-tasks of the plurality of operator types, and determining, from the running indicator information, to-be-detected indicator information respectively corresponding to the first sub-tasks; and determining, by using the to-be-detected indicator information, a second sub-task that runs slowly from the first sub-tasks, and determining a slow node machine according to an execution machine on which a computing node that executes the second sub-task is located.

## Description

The present application claims priority of Chinese Patent Application No. 202310982104.6, filed on August 4, 2023, the disclosure of which is hereby incorporated herein by reference in its entirety as part of the present disclosure.

### TECHNICAL FIELD

The present disclosure relates to the field of computer technologies, and specifically relates to a slow node detection method during task running, an apparatus, an electronic device, and a medium.

### BACKGROUND

With the development of services, streaming data processing has become increasingly common. As a big data streaming processing engine commonly used in the field, the Flink engine can be used to process various Flink tasks. The Flink engine manages a plurality of computing nodes configured to process sub-tasks corresponding to the Flink task, and the plurality of computing nodes may run in different machines of a service cluster.

### SUMMARY

Embodiments of the present disclosure at least provide a slow node detection method during task running, an apparatus, an electronic device, and a medium.

In an aspect, the embodiments of the present disclosure provide a slow node detection method during task running, which comprises:
obtaining running indicator information of a streaming data processing task, wherein the streaming data processing task comprises sub-tasks of a plurality of operator types;
determining a target operator type that is abnormal according to a topological relationship between respective operator types and abnormality reason information that is indicated by the running indicator information;
filtering first sub-tasks of the target operator type from the sub-tasks of the plurality of operator types, and determining, from the running indicator information, to-be-detected indicator information respectively corresponding to the first sub-tasks; and
determining, by using the to-be-detected indicator information, a second sub-task that runs slowly from the first sub-tasks, and determining a slow node machine according to an execution machine on which a computing node that executes the second sub-task is located.

In a possible implementation, after determining the slow node machine, the method further comprises:
according to resource amounts required for respective target computing nodes used for executing the second sub-task in the slow node machine, applying for a target resource for each target computing node in advance by using a service migration interface that is preset;
setting shield information for the slow node machine, wherein the shield information is used to indicate that a new sub-task of the target operator type is unable to be scheduled to a computing node in the slow node machine for execution; and
creating, by using the target resource that is applied, an alternative computing node used for replacing the target computing node, and executing the second sub-task associated with the target computing node by using the alternative computing node.

In a possible implementation, determining the slow node machine according to the execution machine on which the computing node that executes the second sub-task is located comprises:
in response to a target quantity of second sub-tasks being greater than a preset quantity, determining, according to execution machines on which computing nodes that execute the second sub-tasks are located, task quantities corresponding to the execution machines; and
determining the slow node machine according to first ratios of the task quantities corresponding to the execution machines to the target quantity respectively.
In a possible implementation, determining the slow node machine according to the first ratios of the task quantities corresponding to the execution machines to the target quantity respectively comprises:
in response to there being a target ratio greater than or equal to a first preset ratio, taking an execution machine corresponding to the target ratio as the slow node machine; or
in response to each of the first ratios being less than the first preset ratio, taking an execution machine corresponding to a second sub-task with a highest indicator abnormality degree according to indicator abnormality degrees indicated by the to-be-detected indicator information of each second sub-task as the slow node machine.
In a possible implementation, determining, according to the execution machines on which the computing nodes that execute the second sub-tasks are located, the task quantities corresponding to the execution machines, comprises:
in response to the target operator type being a data consumption type, determining, according to data partitions on which the second sub-tasks rely to read data from a message queue, data lag time corresponding to each data partition from the to-be-detected indicator information corresponding to the second sub-tasks;
filtering a plurality of target data partitions from the data partitions according to the data lag time;
determining, according to data management servers to which the target data partitions belong, data partition quantities corresponding to the data management servers; and
in response to second ratios of the data partition quantities corresponding to the data management servers to a first quantity of the target data partitions being all less than a second preset ratio, determining, according to the execution machines on which the computing nodes that execute the second sub-tasks are located, the task quantities corresponding to the execution machines.

In a possible implementation, determining, by using the to-be-detected indicator information, the second sub-task that runs slowly from the first sub-tasks, comprises:
in response to the target operator type being a data consumption type, determining, according to data partitions on which the first sub-tasks rely to read data from a message queue, data lag time corresponding to each data partition from the to-be-detected indicator information corresponding to the first sub-tasks;
determining, according to the data lag time, a second quantity of data partitions whose data lag time is greater than preset time; and
in response to a third ratio of the second quantity to a total quantity of partitions being less than a third preset ratio, determining the second sub-task from the first sub-tasks according to the data lag time corresponding to the data partition, wherein the total quantity of the partitions is a total quantity of the data partitions on which the first sub-tasks rely.

In a possible implementation, determining the second sub-task from the first sub-tasks according to the data lag time corresponding to the data partition comprises:
determining, according to the data lag time corresponding to the data partition, whether there is a to-be-filtered data partition whose data lag time meets a first abnormality condition among the data partitions; and
in response to there being the to-be-filtered data partition, determining the second sub-task according to queries-per-second of a first sub-task that relies on the to-be-filtered data partition.

In a possible implementation, determining, by using the to-be-detected indicator information, the second sub-task that runs slowly, comprises:
in response to the target operator type being another operator type other than a data consumption type, determining, according to task idle degrees indicated by the to-be-detected indicator information of the first sub-tasks, whether there is a third sub-task whose task idle degree meets a second abnormality condition; and
in response to there being the third sub-task, determining the second sub-task according to queries-per-second and a preset query rate of the third sub-task.

In an aspect, the embodiments of the present disclosure further provide a slow node detection apparatus during task running, which comprises:
an obtaining module, configured to obtain running indicator information of a streaming data processing task, wherein the streaming data processing task comprises sub-tasks of a plurality of operator types;
a first determining module, configured to determine a target operator type that is abnormal according to a topological relationship between respective operator types and abnormality reason information that is indicated by the running indicator information;
a second determining module, configured to filter first sub-tasks of the target operator type from the sub-tasks of the plurality of operator types, and determine, from the running indicator information, to-be-detected indicator information respectively corresponding to the first sub-tasks; and
a third determining module, configured to determine, by using the to-be-detected indicator information, a second sub-task that runs slowly from the first sub-tasks, and determine a slow node machine according to an execution machine on which a computing node that executes the second sub-task is located.

In an aspect, the embodiments of the present disclosure further provide an electronic device, which comprises: a processor and a memory. The memory stores a machine-readable instruction that is capable of being executed by the processor, the processor is configured to execute the machine-readable instruction stored in the memory, and when the machine-readable instruction is executed by the processor, the processor performs the slow node detection method described above or the steps in any possible implementation of the slow node detection method.

In an aspect, the embodiments of the present disclosure further provide a non-transitory computer-readable storage medium. The non-transitory computer-readable storage medium stores a computer program, and when the computer program is run by an electronic device, the electronic device performs the slow node detection method described above or the steps in any possible implementation of the slow node detection method.

For descriptions of the effects of the slow node detection apparatus during task running, the electronic device, and the computer-readable storage medium, reference can be made to the descriptions of the foregoing slow node detection method during task running, and no details are described herein again.

### BRIEF DESCRIPTION OF DRAWINGS

In order to clearly illustrate the technical solutions of the embodiments of the present disclosure, the drawings of the embodiments will be briefly described in the following. The accompany drawings herein are incorporated into and form part of the specification, which illustrate embodiments that comply with the present disclosure, and are used together with the specification to explain the technical solutions of the present disclosure. It should be understood that the following drawings only illustrate some embodiments of the present disclosure, and therefore should not be regarded as limiting the scope. For those skilled in the art, other relevant drawings can be obtained based on these drawings without creative labor.
Fig. 1 is a flowchart of a slow node detection method during task running according to an embodiment of the present disclosure;
Fig. 2 is a specific flowchart of determining a second sub-task that runs slowly according to an embodiment of the present disclosure;
Fig. 3 is a specific flowchart of determining a slow node machine according to an embodiment of the present disclosure;
Fig. 4 is a schematic diagram of interaction of a slow node detection method according to an embodiment of the present disclosure;
Fig. 5 is a schematic diagram of a slow node detection apparatus during task running according to an embodiment of the present disclosure; and
Fig. 6 is a schematic structural diagram of an electronic device according to an embodiment of the present disclosure.

### DETAILED DESCRIPTION

In order to make objects, technical solutions, and advantages of the embodiments of the present disclosure apparent, the technical solutions of the embodiments of the present disclosure will be described in a clearly and fully understandable way in connection with the drawings related to the embodiments of the present disclosure. Apparently, the described embodiments are just a part but not all of the embodiments of the present disclosure. The components of the embodiments of the present disclosure described and illustrated here can be arranged and designed in various different configurations. Therefore, the following detailed description of the embodiments of the present disclosure herein is not intended to limit the scope of the present disclosure, but only to represent the selected embodiments of the present disclosure. Based on the embodiments of the present disclosure, those skilled in the art can obtain other embodiments, without any inventive work, which should be within the scope of the present disclosure.

In addition, the terms such as "first", "second", etc. mentioned in the description, claims, and the accompanying drawings of the embodiments of the present disclosure are only used to distinguish similar objects and are not necessarily used to describe a specific order or sequence. It should be understood that the data used in this way can be interchanged in appropriate cases, so that the embodiments described here can be implemented in order other than the orders illustrated or described here. It should be noted that the modifications of "a", "one" and "a plurality of" mentioned in this disclosure are schematic rather than limiting, and those skilled in the art should understand that unless the context clearly indicates otherwise, they should be understood as "one or more".

"A plurality of" or "several" mentioned in this disclosure means two or more than two. "And/or" describes an association relationship between associated objects, and represents that three relationships may exist. For example, A and/or B may represent the following three cases: only A exists, both A and B exist, only B exists. The character "/" generally indicates an "or" relationship between the associated objects.

A plurality of types of sub-tasks corresponding to the plurality of computing nodes may usually run in a same machine, and even tasks corresponding to some other engines may run in this machine. Therefore, with continuous running of various tasks, a certain sub-task that runs in the machine may run slowly, thus affecting the task execution efficiency. In addition, for this sub-task, this machine has a slow node problem.

Therefore, if the machine with the slow node problem can be detected and processed in time, the execution efficiency of the Flink task can be greatly improved. However, the conventional slow node detection scheme usually has the problems of low accuracy of detection result and poor detection effect.

It is found through research that, for slow node detection in streaming data processing scenarios, a common detection method may be using some machine supervision services to detect core indicators of a machine, for example, the use rate of the central processing unit (CPU) of the machine is monitored, and when the use rate reaches a threshold, it is considered that the machine has a slow node problem. Although this manner can implement detection on the slow node problem, the problem of inaccurate detection usually exists. For example, in general, it is needed to set a conservative threshold, but the streaming data processing task is quite sensitive to the delay, and different types of streaming data processing tasks have different sensitivities. Therefore, it is difficult for a conservative threshold to cover all types of streaming data processing tasks, thereby affecting the accuracy of detection. Moreover, this manner does not have the capability of supervising an operating environment of the cluster. For example, in response to a sudden fluctuation or delay in a machine network of a particular network segment, this manner cannot implement discrimination on this case, thus causing a bias to the detection result.

Based on the above research, the present disclosure provides a slow node detection method during task running, an apparatus, an electronic device, and a storage medium. Because the running indicator information can be included in the process of executing a streaming data processing task, and is related to each sub-task of each operator type, slow node detection is performed based on the obtained running indicator information, so as to implement comprehensive analysis and detection on various indicator information, thereby improving accuracy of the determined slow node machine. Whether a task abnormality of an operator type is caused by a task abnormality of another operator type can be accurately determined according to the topological structure between operator types and abnormality reason information, so as to accurately filter a target operator type that may have a slow node problem from a plurality of operator types. Because sub-tasks of different operator types need to use different indicator information when analyzing whether a slow node problem exists, the to-be-detected indicator information respectively corresponding to the first sub-tasks may be filtered from the running indicator information after the target operator type is determined, and then slow node detection is performed based on the to-be-detected indicator information, so as to accurately determine a second sub-task that runs slowly from the first sub-tasks. Then, because the sub-task can be executed by a computing node in a machine included in a service cluster, after the second sub-task is determined, a slow node machine that has a slow node problem can be accurately determined according to an execution machine on which the computing node that executes the second sub-task is located, so as to implement accurate detection on the slow node problem. In addition, because the running indicator information can be uploaded in real time by the execution machine during the process of executing the streaming data processing task, the running indicator information can be obtained in real time, so as to detect the slow node problem in real time based on the running indicator information, thereby improving instantaneity of detection.

The defects that exist in the foregoing solutions are all results of the inventor's practice and careful study. Therefore, the process of discovery of the foregoing problems and the solutions proposed in the present disclosure hereinafter for the foregoing problems should be the inventor's contribution to the present disclosure.

In order to make the foregoing objectives, features and advantages of the present disclosure more obvious and understandable, the following provides detailed descriptions by using preferred embodiments in cooperation with the accompanying drawings.

It should be noted that similar reference numerals and letters indicate similar items in the following accompanying drawings, so that once an item is defined in an accompanying drawing, it does not need to be further defined and explained in subsequent accompanying drawings.

It may be understood that before the technical solutions disclosed in the embodiments of the present disclosure are used, the user should be informed of the type, scope of use, use scenarios, and the like of personal information involved in the present disclosure in a proper manner in accordance with the relevant laws and regulations, and authorization of the user should be obtained.

It should be noted that, specific terms mentioned in the embodiments of the present disclosure include followings.

Flink: it is an open-source flow processing framework, the core thereof is a distributed flow data flow engine written by Java and Scala, where Flink executes any flow data program in a data parallelism and pipelining manner.

Kubernetes (K8s): it is an open-source application used to manage containerization on a plurality of hosts in a cloud platform. Kubernetes aims to enable distributed and containerized service clusters to be simple and efficient.

Yarn: it is a general resource management system, and can provide uniform resource management and scheduling for upper-layer applications.

For ease of understanding of the embodiments, the slow node detection method during task running provided by the embodiments of the present disclosure is first described in detail. An execution body of the slow node detection method during task running provided by the embodiments of the present disclosure is usually a terminal device or another processing device that has a certain computing capability. The terminal device may be user equipment (UE), a mobile device, a user terminal, a terminal, a personal digital assistant (PDA), a handheld device, an electronic device, or the like. In some possible implementations, the slow node detection method during task running may be implemented in a manner of calling, by a processor, computer-readable instructions stored in a memory.

The following describes, by taking that the execution body is an electronic device as an example, the slow node detection method during task running provided by the embodiments of the present disclosure.

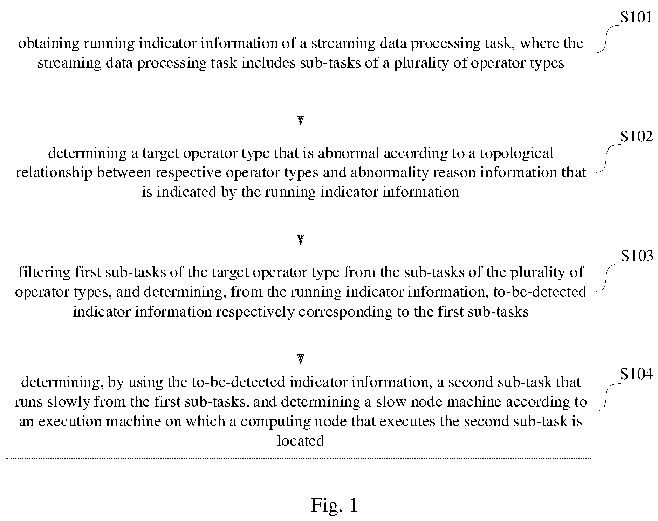

Fig. 1 is a flowchart of a slow node detection method during task running provided by an embodiment of the present disclosure. The method includes the following steps.

S101: obtaining running indicator information of a streaming data processing task, where the streaming data processing task includes sub-tasks of a plurality of operator types.

Herein, the streaming data processing task may be a task of performing data processing on incessant streaming data by using the Flink engine according to the data processing requirements. A streaming data processing scenario may usually include a plurality of types of streaming data processing tasks, and different types of streaming data processing tasks correspond to different data processing requirements. One type of streaming data processing task may be referred to as one type of Flink task, and the Flink task in the following is the streaming data processing task. The slow node detection method during task running provided by the embodiments of the present disclosure can be used to perform slow node detection on any type of streaming data processing task. For example, the Flink task may be, for example, a ranking list computing task, an order quantity computing task, an interactive information computing task, an information recommendation task, or the like.

The streaming data processing task may include sub-tasks of a plurality of operator types, and may include at least one sub-task of each operator type. The quantity of sub-tasks of each operator type may be determined according to a task parallelism degree corresponding to the operator type. Each sub-task may be executed by a computing node in a machine included in a service cluster, one service cluster may include at least one machine, and one machine may include at least one computing node. One type of Flink task may be executed by at least one service cluster. Each Flink cluster may be deployed with one Flink engine. One Flink engine may correspond to one job manager (JobManager, JM for short) and a plurality of task managers (TaskManager, TM for short). One TM is one computing node in the machine, and one TM may run at least one sub-task. The JM is configured to manage various TMs and schedule to-be-executed sub-tasks for the TMs.

Sub-tasks of different operator types may usually have different computing powers and different data processing functions for processing streaming data in different manners. For example, the operator type may include, for example, a resource operator of a data consumption type, a sink operator of a data output type, a map operator of a data iteration type, a sync operator of data synchronization type, or the like. There is a communication function between sub-tasks of different operator types, and there is a topological relationship between different operator types. The topological relationship indicates the communication relationship and execution sequence between sub-tasks of various operator types. For example, the topological relationship may be: source operator -> sync operator -> sink operator. The communication relationship indicated by this topological relationship is: there is a communication relationship between the sub-task of the source operator type and the sub-task of the sync operator, and there is a communication relationship between the sub-task of the sync operator and the sub-task of the sink operator. The execution sequence indicated by this topological relationship is: after the sub-task of the source operator type is executed, the sub-task of the sync operator is executed; and after the sub-task of the sync operator is executed, the sub-task of the sink operator type is executed.

For example, one operator type may be further sub-divided into a plurality of sub-types, and each sub-type may include a sub-task of the sub-type. For example, the sink operator of the data output type may include three sub-types: a sink 1 operator corresponding to a data output type 1, a sink 2 operator corresponding to a data output type 2, and a sink 3 operator corresponding to a data output type 3. In this case, the topological relationship between the operator types may be a topological relationship between various operator types and sub-types. For example, the topological relationship may be: source operator -> sync operator -> sink 1 operator -> sink 2 operator -> sink 3 operator, where not only the sink 1 operator but also the sink 3 operator can be connected behind the sync operator.

The running indicator information is indicator information used to determine whether the slow node problem exists, and can indicate various types of engine indicator information of Flink engines related to the streaming data processing task during the process of executing the streaming data processing task. The running indicator information may specifically include indicator information related to each sub-task of each operator type in the process of the executing the streaming data processing task, and some indicator information related to the overall streaming data processing task. For ease of understanding, one piece of the running indicator information of Flink task may include, for example, some indicator information related to the overall Flink task, as well as indicator information related to sub-tasks that run in each TM.

For example, the running indicator information may include data lag time of the Flink task, a data lag indicator (i.e., a lag time indicator) of each sub-task included in the Flink task, an abnormality reason indicator (i.e., a back pressured indicator) of each operator type, and an idle degree indicator (i.e., a busy indicator) of each sub-task. The data lag indicator is used to indicate the data lag time of the task, and the abnormality reason indicator is used to indicate a back pressured degree of each operator type. When a back pressured degree corresponding to a back pressured indicator of an operator type is greater than a back pressured threshold, it indicates that the sub-task of this operator type is back pressured by sub-tasks of other operator types having the topological relationship therebetween. Therefore, the abnormality reason indicator may represent abnormality reason information of various operator types. The idle degree indicator is used to represent busy degree of the task.

During specific implementation, respective machines in the service cluster related to the Flink task may upload the running indicator information generated in the process of executing the Flink task to an indicator database. The indicator database may be an external storage system independent of the machine on which the slow node automatic detection service is located and the service cluster, and is used to dynamically maintain the running indicator information generated when respective service clusters execute the Flink task. When it is determined that it is needed to perform slow node detection on the service cluster that runs the Flink task, the running indicator information generated by the service cluster within corresponding execution time may be obtained from the indicator database. The execution time herein may be a preset time period, for example, last 15 minutes, last 30 minutes, or the like, or may be duration in which the service cluster has executed the Flink task.

It should be noted that, the slow node detection method during task running provided by the embodiments of the present disclosure can be deployed in a machine in the form of slow node automatic detection service. When the streaming data processing task on which detection needs to be performed is a large-scale or even a super-large-scale task, the slow node automatic detection service may be deployed in at least one service cluster in the distributed manner. When slow node detection needs to be performed on any type of Flink task, any idle machine may be determined from the service cluster according to a load balance strategy, and slow node detection is performed on the Flink task according to the slow node detection method during task running provided by the embodiments of the present disclosure based on the deployed slow node automatic detection service by using this machine. For example, a detection period may be preset, and slow node detection is performed on a service cluster corresponding to the Flink task according to the preset detection period. The detected slow node may be specifically one or more machines in the service cluster.

S102: determining a target operator type that is abnormal according to a topological relationship between respective operator types and abnormality reason information that is indicated by the running indicator information.

The topological relationship herein is used to indicate a communication relationship and an execution sequence between tasks and sub-tasks of various operator types. The abnormality reason information is used to indicate an association relationship between a task abnormality of a certain operator type and a task abnormality of another operator type, and the association relationship can reflect whether a task abnormality of a certain operator type is caused by a task abnormality of another operator type. The abnormality reason information may be information indicated by back pressured indicators of various operator types in the running indicator information. When the back pressured degree corresponding to the back pressured indicator of an operator type is greater than a back pressured threshold, it may indicate whether an abnormality of a sub-task of the operator type is caused by abnormal back pressure of a sub-task of another operator type that has a topological relationship therebetween. Therefore, the abnormality reason information indicated by the back pressured indicator may indicate whether a task abnormality of an operator type is related to a task abnormality of another operator type that has a topological relationship therebetween.

One operator type may correspond to one piece of abnormality reason information, which is determined by a back pressured degree indicated by a back pressured indicator of this operator type.

For example, the topological relationship may be: source operator -> sync operator -> sink 1 operator -> sink 2 operator. When back pressured indicators corresponding to the source operator and the sync operator are both greater than the back pressured threshold, and the back pressured degree indicated by the back pressured indicator of the sink 1 operator is less than the back pressured threshold, it can be determined that an abnormality of a sub-task of the source operator type is caused by abnormal back pressure of a sub-task of the sync operator type, and the abnormality of the sub-task of the sync operator type is caused by abnormal back pressure of the sub-task of the sink 1 operator type. Therefore, the abnormality reason information corresponding to the source operator type may be true, the abnormality reason information corresponding to the sync operator may also be true, and the abnormality reason information corresponding to the sink 1 operator type and the sink 2 operator type are both false.

During specific implementation, after the running indicator information of the Flink task is obtained, task lag time corresponding to the Flink task may be determined according to a data lag indicator related to the Flink task in the running indicator information. In the case where the task lag time is less than or equal to a task lag time threshold, it may be determined that there is no slow node problem. Otherwise, in the case where the task lag time is greater than the task lag time threshold, it may be determined that the Flink task has a high lag problem, so that an idle application programming interface (API) of the Flink engine can be used to determine abnormality reason information corresponding to various operator types according to back pressured degrees indicated by back pressured indicators corresponding to various operator types in the running indicator information.

Then, according to the abnormality reason information corresponding to the various operator types, it is determined whether sub-tasks of the various operator types are back pressured. That is, whether abnormality reason information indicating whether a task abnormality of a certain operator type is related to a task abnormality of another operator type exists in the abnormality reason information corresponding to the various operator types is determined. If yes, it may be determined that there is sub-task back pressured, and then a root type that causes back pressure is determined from a plurality of operator types according to the topological relationship between the various operator types, and this type is taken as the target operator type. For example, if the topological relationship is: source operator -> sync operator -> sink 1 operator -> sink 2 operator -> sink 3 operator, and if the abnormality reason information corresponding to the source operator type and the sync operator type both indicates back pressure, as well as the abnormality reason information corresponding to the sink 1 operator type, the sink 2 operator type, and the sink 3 operator type all indicates no back pressure, it can be determined that the root type is the sink 1 operator type, that is, it can be determined that the sink 1 operator type is the target operator type. An abnormality corresponding to the target operator type indicates that the sub-task of this operator type has abnormality.

If it is determined that the abnormality reason information of the various operator types all indicates no back pressure, that is, in the case where it is determined that the sub-tasks of the operator types are not back pressured, then it can be determined that the target operator type is the data consumption type (i.e., the source operator type).

S103: filtering first sub-tasks of the target operator type from the sub-tasks of the plurality of operator types, and determining, from the running indicator information, to-be-detected indicator information respectively corresponding to the first sub-tasks.

The first sub-task herein is a sub-task of the target operator type. The to-be-detected indicator information may be indicator information that is used to determine whether the first sub-task of the target operator type has the slow node problem in the running indicator information.

Sub-tasks of different operator types need to use different slow node indicator information. That is, when it is detected whether sub-tasks of different operator types have the slow node problem, different running indicator information is used. For example, when the target operator type is the source operator type, the data lag time indicated by the data lag indicator may be used for determining. When the target operator type is another operator type other than the source operator type, the task idle degree indicated by the idle degree indicator may be used for determining.

For example, when the target operator type is the source operator type, data lag indicators respectively corresponding to first sub-tasks of the source operator type may be obtained from the running indicator information. When the target operator type is another operator type other than the source operator type, idle degree indicators respectively corresponding to the first sub-tasks are obtained from the running indicator information.

S104: determining, by using the to-be-detected indicator information, a second sub-task that runs slowly from the first sub-tasks, and determining a slow node machine according to an execution machine on which a computing node that executes the second sub-task is located.

The second sub-task herein may be a first sub-task that runs slowly in the TM, and the execution machine is a machine on which the TM that executes the second sub-task is located. The slow node machine may be a machine that has the slow node problem among the machines included in service clusters that perform the Flink task.

During specific implementation, for each first sub-task, whether the to-be-detected indicator information of the first sub-task is abnormal can be determined. If yes, this first sub-task is used as one second sub-task. If no, it is determined that this first sub-task runs normally. Alternatively, for each first sub-task, a slow node detection manner of the target operator type is determined based on the target operator type of the first sub-task, and the slow node detection manner is used to detect the to-be-detected indicator information of the first sub-task, so as to determine whether this first sub-task can be used as the second sub-task. The slow node detection manner corresponding to various target operator types will be described in detail below.

After the second sub-task is determined, an execution machine on which the TM that executes the second sub-task is located can be first determined, and then this execution machine can be directly used as the slow node machine. Alternatively, after the execution machine on which the TM that executes the second sub-task is located is determined, the execution machine may be further detected by using the to-be-detected indicator information, so as to determine whether the execution machine has the slow node problem, thereby determining an accurate slow node machine.

Optionally, if the Flink itself does not have the slow node problem, there may be no determined second sub-task, and there may also be no slow node machine.

In an embodiment, for the step "determining the second sub-task" in S104, when the target operator types are different, different slow node detection manners may be used for completing this step. Specifically, when the target operator type is the data consumption type, the second sub-task may be determined in the slow node detection manners illustrated in the following steps S104-1 to S 104-3.

S104-1: in response to the target operator type being a data consumption type, determining, according to data partitions on which the first sub-tasks rely to read data from a message queue, data lag time corresponding to each data partition from the to-be-detected indicator information corresponding to the first sub-tasks.

Herein, the first sub-task of the source operator type is used to read data from the message queue (MQ), a plurality of data partitions exist in the message queue, and different data partitions are used to store streaming data of different themes. The message queue may be any type of message queue in the existing technology, for example, a rabbit message queue (RabbitMQ), a rocket message queue (RocketMQ), an active message queue (ActiveMQ), a kafka message queue (kafkaMQ), or the like. The following is described by using an example in which the message queue is the kafka queue, and the data partitions may be partitions in the kafka queue.

One sub-task can perform data reading and consumption in at least one data partition of the message queue, and different sub-tasks rely on different data partitions to read data from the message queue.

When the target operator type is the source operator type, the to-be-detected indicator information may include data lag indicators respectively corresponding to the data partitions on which the first sub-tasks rely, the data lag indicators indicate data lag time corresponding to the data partitions, and the data lag time of the data partitions may be represented by partition lag.

During specific implementation, when the target operator type is the source operator type, each data partition used by each first sub-task of the source operator type to read streaming data from the kafka queue may be first determined. One sub-task corresponds to at least one data partition. Then, for each first sub-task, the data lag indicators respectively corresponding to the data partitions used by the first sub-task are determined from the to-be-detected indicator information of the first sub-task, and then the data lag time corresponding to respective data partitions is determined according to the data lag indicator, that is, partition lag of each partition is determined.

S104-2: determining, according to the data lag time, a second quantity of data partitions whose data lag time is greater than preset time.

The preset time herein may be set according to experience, and is not specifically limited in the embodiments of the present disclosure. For example, the preset time may be 0. The second quantity is a quantity of data partitions whose partition lag is greater than the preset time.

During specific implementation, after the partition lag of each data partition corresponding to the first sub-tasks is obtained, whether there is a data partition whose partition lag is greater than the preset time may be determined, that is, whether there is a lag data partition is determined. If no, it may be determined that each first sub-task runs normally, and the slow running problem does not exist. If yes, the second quantity of data partitions whose partition lag is greater than the preset time may be determined.

S 104-3: in response to a third ratio of the second quantity to a total quantity of the partitions is less than a third preset ratio, determining the second sub-task from the first sub-tasks according to the data lag time corresponding to the data partitions, where the total quantity of the partitions is a total quantity of the data partitions on which the first sub-tasks rely.

The total quantity of the partitions herein may be a sum of quantities of data partitions on which the first sub-tasks respectively rely. The third preset ratio may be set according to experience, and is not specifically limited in the embodiments of the present disclosure. For example, the third preset ratio may be 1/5.

During specific implementation, after the second quantity is determined, it is determined whether a third ratio of the second quantity to the total quantity of the partitions is less than the third preset ratio. If no, it may be determined that a wide range of lags occur in the Flink task, and this is unrelated to the machine, so that it can be determined that there is no second sub-task in the first sub-tasks. If yes, it may be determined that the data lags of the data partitions of second quantity may be caused by the machine that runs the first sub-task, so that the second sub-task can be filtered from the first sub-tasks according to the partition lag of the data partition corresponding to the first sub-tasks. For example, the first sub-task corresponding to the data partition whose partition lag is greater than the preset time may be used as the filtered second sub-task.

In an embodiment, the step "determining the second sub-task from the first sub-tasks according to the data lag time corresponding to the data partitions" in step S104-3 may be performed according to the following steps.

S104-3-1: determining, according to the data lag time corresponding to the data partitions, whether there is a to-be-filtered data partition whose data lag time meets a first abnormal condition in the data partitions.

The first abnormal condition herein is used to filter abnormal lag time from the data lag time of the data partitions. For example, the first abnormal condition may be that the data lag time is greater than first specified time, or a difference between the data lag time and a median of the data lag time of the data partitions is greater than a second specified time, or the like. During specific implementation, the first abnormal condition may be set according to experience, and is not specifically limited in the embodiments of the present disclosure.

During specific implementation, abnormality filtering may be performed on the data lag time corresponding to the data partitions by using an abnormal value filtering algorithm, so as to determine whether there is target lag time that meets the first abnormal condition. If yes, the data partition corresponding to the target lag time may be used as the to-be-filtered data partition, and the following S104-3-2 is performed. There may be one or more determined to-be-filtered data partitions. If no, it may be considered as the usual lag of the first sub-task, and there is no slow running problem.

For example, in the case where data lag time respectively corresponding to data partitions 1 to 10 are 10, 10, 10, 100, 1000, and 10000, the target lag time may be determined as 100, 1000, and 10000, and data partitions respectively corresponding to the three pieces of target lag time are used as to-be-filtered data partitions.

S104-3-2: if there is the to-be-filtered data partition, determining the second sub-task according to queries-per-second of the first sub-task that relies on the to-be-filtered data partition.

Here, queries-per-second (QPS) is used to indicate the flow of tasks processed by the machine that executes the task within one second.

During specific implementation, after it is determined that there is to-be-filtered data partition whose data lag time is abnormal, an inflow QPS of the first sub-task that uses streaming data of the to-be-filtered data partition may be determined, and then whether the inflow QPS is greater than or equal to a preset multiple of an average QPS of the first sub-tasks may be determined. If no, the first sub-task with the inflow QPS is used as the second sub-task. If yes, it may be determined that the partition lag of the first sub-task with the inflow QPS is caused by data imbalance, and even if machine migration is performed, the lag problem cannot be resolved, and therefore, it may be determined that this first sub-task is a sub-task that runs normally, and is not processed.

In this way, a sub-task with a relatively high lag can be determined based on abnormal value filtering in the data lag time, and the slow node machine with the slow node problem can be accurately determined based on the sub-task with the relatively high lag.

In another embodiment, for the step "determining the second sub-task" in step S104, when the target operator type is another operator type other than the data consumption type, the second sub-task may be determined in the slow node detection manners illustrated in the following step 1 and step 2.

Step 1: in response to the target operator type being another operator type other than a data consumption type, determining, according to task idle degrees indicated by the to-be-detected indicator information of the first sub-tasks, whether there is a third sub-task whose task idle degree meets a second abnormal condition.

Herein, when the target operator type is not the source operator type, no matter which operator type that is in the operator types other than the source operator type and that the target operator type is, the to-be-detected indicator information of the first sub-tasks may be idle degree indicators of the first sub-tasks.

The second abnormal condition is used to filter an abnormally busy third sub-task from the first sub-tasks. For example, the second abnormal condition may be that a task idle degree is less than a first preset degree, or a difference between the task idle degree and a median of the task idle degrees of the first sub-tasks is greater than a second preset degree, etc. During specific implementation, the second abnormal condition may be set according to experience, and is not specifically limited in the embodiments of the present disclosure.

During specific implementation, when the target operator type is not the source operator type, whether there is a third sub-task whose task idle degree meets the second abnormal condition is determined according to the task idle degrees indicated by the to-be-detected indicator information of the first sub-tasks by using an abnormal value filtering algorithm. If yes, the third sub-task that is abnormally busy is determined, so that the following step 2 can be performed based on the determined third sub-task.

If no, it is determined that each first sub-task is relatively idle, and back pressure of each sub-task is within a normal range, so that each first sub-task can be used as a sub-task that runs normally, and the slow node problem does not exist, and therefore no processing need to be performed.

Step 2: If there is the third sub-task, determining the second sub-task according to queries-per-second and a preset query rate of the third sub-task.

The preset query rate herein may be a preset multiple of an average QPS of the third sub-task. The preset multiple may be set according to experience, and is not specifically limited herein. For example, the preset multiple may be 1.5 times.

During specific implementation, after the third sub-task that is abnormally busy is determined, an inflow QPS of the third sub-task may be determined, and whether the inflow QPS is greater than the preset query rate is determined. If yes, it may be determined that business of the third sub-task is caused by data skew, and even if machine migration is performed, the lag problem cannot be resolved, and therefore, it may be determined that the third sub-task is a sub-task that runs normally, and is not processed. If no, the third sub-task may be determined as the second sub-task that runs slowly.

In this way, the abnormally busy third sub-task can be determined based on abnormal value filtering in the task idle degrees, and the slow node machine with the slow node problem can be accurately determined based on the third sub-task.

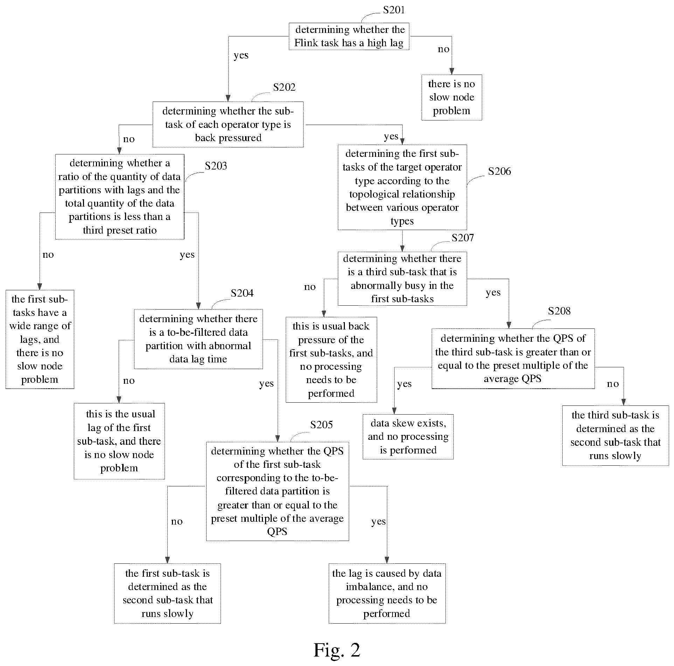

Fig. 2 is a specific flowchart of determining a second sub-task that runs slowly provided by an embodiment of the present disclosure, which may include the following steps.

S201: determining whether the Flink task has a high lag based on a data lag indicator of the Flink task.

If no, it is determined that there is no slow node problem; if yes, the following step S202 and subsequent steps are performed.

S202: determining whether the sub-task of each operator type is back pressured.

If no, steps S203 to S205 are performed; if yes, steps S206 to S208 are performed.

S203: determining whether a ratio of the quantity of data partitions with lags and the total quantity of the data partitions is less than a third preset ratio.

If no, it is determined that the first sub-tasks have a wide range of lags, and there is no slow node problem; if yes, the following step S204 is performed.

S204: determining whether there is a to-be-filtered data partition with abnormal data lag time.

If no, it is determined that this is the usual lag of the first sub-task, and there is no slow node problem; if yes, the following step S205 is performed.

S205: determining whether the queries-per-second (QPS) of the first sub-task corresponding to the to-be-filtered data partition is greater than or equal to the preset multiple of the average QPS.

If no, it is determined that the first sub-task is the second sub-task that runs slowly; if yes, it is determined that the lag is caused by data imbalance, and no processing needs to be performed.

For specific implementation steps of the foregoing S203 to S205, reference can be made to the foregoing S104-1 to S104-3, and details are not described herein again.

S206: determining the first sub-tasks of the target operator type according to the topological relationship between various operator types.

For the specific implementation process of this step, reference can be made to S102, and details are not described herein again.

S207: determining whether there is a third sub-task that is abnormally busy in the first sub-tasks.

If no, it is determined that this is usual back pressure of the first sub-tasks, and no processing needs to be performed; if yes, the following step S208 is performed.

S208: determining whether the queries-per-second (QPS) of the third sub-task is greater than or equal to the preset multiple of the average QPS.

If yes, it is determined that data skew exists, and no processing is performed; if no, the third sub-task is determined as the second sub-task that runs slowly.

For specific implementation steps of the foregoing steps S207 and S208, reference can be made to the foregoing step 1 and step 2, and details are not described herein again.

In an embodiment, the step "determining the slow node machine with the slow node problem" in step S104 may be implemented according to the following steps.

S1: in response to a target quantity of second sub-tasks being greater than a preset quantity, determining, according to execution machines on which computing nodes that execute the second sub-tasks are located, task quantities corresponding to each execution machine.

The target quantity herein is a total quantity of determined second sub-tasks. The preset quantity may be set according to experience, and is not specifically limited in the embodiments of the present disclosure. For example, the preset quantity may be 1. The task quantity corresponding to an execution machine is a total quantity of second sub-tasks executed by this execution machine.

During specific implementation, after the second sub-task is determined, whether the quantity of the second sub-tasks is greater than 1 is first determined. If no, the execution machine on which a computing node that executes the second sub-task is located is directly used as the slow node machine. If yes, the task quantity corresponding to each execution machine is determined according to the execution machine on which a computing node that executes each of the plurality of second sub-tasks is located.

Optionally, in the case where there is one second sub-task, whether an non-aggregation migration function is set can be further determined. This function indicates to perform migration on the machine corresponding to the unique second sub-task when there is only one second sub-task, or when there are a plurality of second sub-tasks, even if the determined second sub-tasks do not appear in one machine in a massive manner, migration is also performed on the machine. If the non-aggregation migration function is configured, it may be determined that the execution machine on which the TM that executes the unique second sub-task is located is the slow node machine. If the non-aggregation migration function is not configured, it may be determined that there is no slow node machine, and the second sub-task that runs slowly is not processed.

S2: determining the slow node machine according to first ratios of the task quantities corresponding to the execution machines to the target quantity respectively.

During specific implementation, for each execution machine used to execute the second sub-tasks, the first ratio of a task quantity corresponding to this execution machine to the target quantity is determined. After the first ratios respectively corresponding to the execution machines are obtained, the slow node machine may be determined according to the first ratios. For example, an execution machine corresponding to the maximum first ratio may be used as the slow node machine.

In an embodiment, after the first ratios respectively corresponding to the execution machines are obtained, the relationship between the first ratio and a first preset ratio may be determined, so as to determine the slow node machine in different manners. The first preset ratio may be set according to experience, and is not specifically limited in the embodiments of the present disclosure. For example, the first preset ratio may be 2/3.

Specifically, when a target ratio greater than or equal to the first preset ratio exists, an execution machine corresponding to the target ratio is used as the slow node machine.

The target ratio herein may be the first ratio greater than or equal to the first preset ratio. When there is the target ratio, the execution machine corresponding to the target ratio may be used as the slow node machine. In this way, because the target ratio is greater than or equal to the first preset ratio, the execution machine corresponding to the target ratio is a machine with massive second sub-tasks that run slowly. The machine is used as the slow node machine and is migrated by using the following steps, so as to improve rationality of machine migration and execution efficiency of the plurality of second sub-tasks.

Alternatively, when each of the first ratios is less than the first preset ratio, an execution machine corresponding to a second sub-task with a highest indicator abnormal degree indicated by the to-be-detected indicator information of each of the second sub-tasks is used as the slow node machine.

The indicator abnormal degree herein may be an abnormal degree of an indicator value in the to-be-detected indicator information. For example, when the target operator type is the source operator type, the indicator exception degree indicated by the to-be-detected indicator information may reflect time duration of the data lag time corresponding to each data partition; and when the target operator type is not the source operator type, the indicator exception degree indicated by the to-be-detected indicator information may reflect the task idle degree of each first sub-task.

During specific implementation, when each first ratio is less than the first preset ratio, that is, there is no first ratio that is greater than or equal to the first preset ratio, it may indicate that there is no machine aggregation in the second sub-tasks of target quantity (that is, the second sub-tasks of target quantity do not gather in a same one machine in a massive manner). In this case, the execution machine corresponding to the second sub-task with the highest indicator abnormal degree indicated by the to-be-detected indicator information of each of the second sub-tasks may be used as the slow node machine. For example, when the second sub-task is a sub-task of the source operator type, an execution machine on which a second sub-task corresponding to a data partition with longest data lag time is located may be used as the slow node machine. When the second sub-task is not the sub-task of the source operator type, an execution machine on which a second sub-task with the lowest task idle degree is located may be used as the slow node machine. In this way, slow running cases of non-machine-engine can be filtered by using machine aggregation and abnormal value filtering algorithms, so as to improve accuracy of the determined second sub-task that runs slowly.

Optionally, when each of the first ratios is less than the first preset ratio, whether the non-aggregation migration function is set may also be determined. If yes, the execution machine corresponding to the second sub-task with the highest indicator abnormal degree may be used as the slow node machine; if no, it may be determined that the slow running of tasks is within a reasonable range in the case that the second sub-tasks do not gather in a same one machine in a massive manner, and therefore, it may be determined that there is no slow node machine, and the second sub-task that runs slowly is not processed.

In an embodiment, step S1 may be performed according to the following steps.

S1-1: in response to the target operator type being a data consumption type, determining, according to data partitions on which the second sub-tasks rely to read data from a message queue, data lag time corresponding to each data partitions from the to-be-detected indicator information corresponding to the second sub-tasks.

During specific implementation, before step S1 is performed, whether the target operator type is the data consumption type may further be first determined, and if yes, steps S1-1 to S1-4 may be first performed in sequence and then step S2 is performed; otherwise, steps S1 and S2 may be directly performed, and in this case, step S1 does not include steps S1-1 to S1-4.

The specific implementation process of step S1-1 is similar to the execution process of the forgoing step S104-1, and details are not described herein again. For example, when the target operator type is the source operator type, the partition lag corresponding to the data partition on which each second sub-task relies may be obtained from the to-be-detected indicator information.

S1-2: filtering a plurality of target data partitions from the data partitions according to the data lag time.

During specific implementation, the data partitions may be sorted in descending order of duration of partition lags of the data partitions, so as to obtain a sorting order of the data partitions. Then, the data partition whose sorting order is less than a preset order may be used as the target data partition. In this way, a plurality of partitions with relatively long partition lag can be filtered from the data partitions. For example, the preset order may be 11, and thus data partitions with partition lag ranking top ten may be filtered.

It should be understood that, when the total quantity of data partitions is less than a value corresponding to the preset order, the data partitions may all be used as the target data partitions.

S1-3: determining, according to data management server to which each target data partition belongs, data partition quantities corresponding to the data management servers.

Herein, different data partitions may be managed by different data management servers, and the data management servers are brokers corresponding to the message queue. The data partition quantity is the quantity of target data partitions managed by each broker.

During specific implementation, after the target data partitions are filtered, the data management server to which each target data partition belongs may be determined, and then the quantity of target data partitions managed by each data management server (i.e., the data partition quantity) may be further determined.

S1-4: in response to second ratios of the data partition quantities corresponding to the data management servers to a first quantity of the target data partitions being all less than a second preset ratio, determining, according to the execution machines on which the computing nodes that execute the second sub-tasks are located, the task quantity corresponding to each execution machine.

The second preset ratio herein may be set according to experience, and is not specifically limited in the embodiments of the present disclosure. For example, the second preset ratio may be 2/3. The first quantity is the quantity of the target data partitions.

During specific implementation, the second ratio corresponding to each data management server may be determined according to the data partition quantity corresponding to each data management server and the first quantity. Then, whether there is a second ratio that is greater than the second preset ratio is determined. If yes, it may be determined that the reason for slow running of the Flink task may be the problem of the data management server itself corresponding to the second ratio greater than or equal to the second preset ratio, rather than the machine. Therefore, it may be determined that there is no slow node machine, and the second sub-task is not processed. If no, that is, each second ratio is less than the second preset ratio, it may indicate that the reason for slow running of the Flink task in this case is not the problem of the data management server itself, but the machine. Therefore, the slow node machine may be determined according to the first ratios of the task quantities corresponding to the execution machines to the target quantity, as well as the relationship between the first ratios and the first preset ratio.

In this way, the problem of slow running of the task due to the problem of the data management server itself can be filtered out based on the second ratio corresponding to the data management server, so as to improve accuracy of the determined slow node machine.

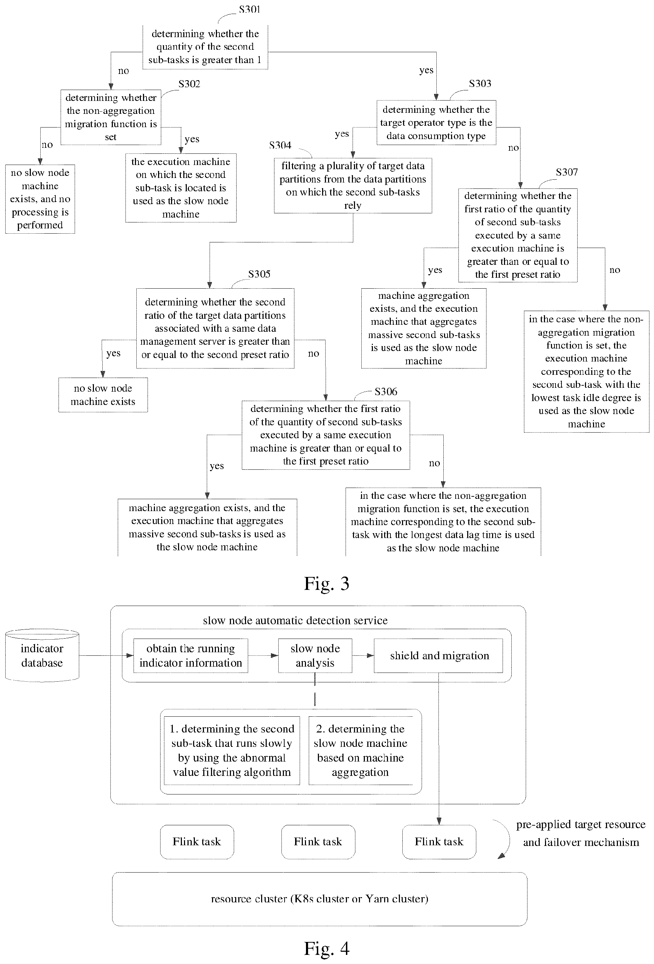

Fig. 3 is a specific flowchart of determining a slow node machine provided by an embodiment of the present disclosure. The flow may include the following steps.

S301: determining whether the quantity of the second sub-tasks is greater than 1.

If no, step S302 is performed; if yes, step S303 is performed.

S302: determining whether the non-aggregation migration function is set.

If yes, the execution machine on which the second sub-task is located is used as the slow node machine; if no, it is determined that no slow node machine exists, and no processing is performed.

S303: determining whether the target operator type is the data consumption type.

If yes, steps S304 to S306 are performed; if no, step S307 is performed.

S304: filtering a plurality of target data partitions from the data partitions on which the second sub-tasks rely.

For the specific implementation process of this step, reference may be made to the foregoing steps S1-1 and S1-2.

S305: determining whether the second ratio of the target data partitions associated with a same data management server is greater than or equal to the second preset ratio.

If yes, it is determined that no slow node machine exists, and no processing is performed; if no, step S306 is performed.

For the specific implementation process of this step, reference may be made to steps S1-1 and S1-4.

S306: determining whether the first ratio of the quantity of second sub-tasks executed by a same execution machine is greater than or equal to the first preset ratio.

If yes, it is determined that machine aggregation exists, and the execution machine that aggregates massive second sub-tasks is used as the slow node machine; if no, in the case where the non-aggregation migration function is set, the execution machine corresponding to the second sub-task with the longest data lag time is used as the slow node machine.

S307: determining whether the first ratio of the quantity of second sub-tasks executed by a same execution machine is greater than or equal to the first preset ratio.

If yes, it is determined that machine aggregation exists, and the execution machine that aggregates massive second sub-tasks is used as the slow node machine; if no, in the case where the non-aggregation migration function is set, the execution machine corresponding to the second sub-task with the lowest task idle degree is used as the slow node machine.

For specific implementation steps of the foregoing steps S301 to S307, reference may be made to the foregoing embodiments, and details are not described herein again.

In an embodiment, after the slow node machine is determined, the slow node machine may be further migrated, so as to resolve the slow node problem. Specifically, machine migration may be performed according to the following steps.

P1: applying for a target resource for each target computing node in advance according to a resource amount required for each target computing node used to execute the second sub-task in the slow node machine by using a service migration interface that is preset.

The service migration interface herein may be an API pre-developed inside the Flink engine, and has a capability of calling the machine migration function. The machine migration function can migrate the TM running the second sub-task to a new machine, that is, the machine migration function can migrate the second sub-task that runs slowly in the slow node machine with the slow node problem into a new machine for execution.

It should be noted that, the machine migration function is not a function already existing in the prior art, but a function specially developed for the slow node problem, and can not only implement machine migration, but also have optimization functions such as "blocking + resource pre-application", to optimize the migration work. Blocking means setting shield information in the following text, and resource pre-application means pre-applying for target resources.

The target computing node is a computing node that is configured to execute the second sub-task that runs slowly in the slow node machine, that is, the TM that is configured to execute the second sub-task in the slow node machine.

The resource amount required by the target computing node is container resource required for running one target computing node, for example, Pod container resource in K8s or container resource. The target resource is the container resource obtained through pre-application.

During specific implementation, the machine migration function may be called through the service migration interface, the resource amount required by each target computing node is first determined, and then, according to the resource amount, the container resource corresponding to the resource amount is pre-applied for each target computing node in K8s.

P2: setting shield information for the slow node machine, where the shield information indicates that a new sub-task of the target operator type is unable to be scheduled to the computing node in the slow node machine for execution.

The new sub-task herein may be a newly generated sub-task of the target operator type after it is determined to set the shield information, for example, a new sub-task of the source operator type, or a new sub-task of the sink operator type. The shield information indicates that the new sub-task of the target operator type cannot be scheduled to the computing node in the slow node machine. That is, the shield information indicates to block the sub-task of the target operator type in the Flink task from the slow node machine, to ensure that after the new sub-task of the target operator type is subsequently generated, the new sub-task is not scheduled to the slow node machine, and the Flink task on which slow node detection is performed is not called to the slow node machine.

Optionally, the shield information may include a shield duration, so as to ensure that the new sub-task of the target operator type cannot be scheduled, within the shield duration, to the computing node in the slow node machine for execution. After the shield duration expires, the new sub-task of the target operator type can be re-scheduled to the computing node in the slow node machine for execution.

During specific implementation, after the slow node machine is determined, the Flink task on which current slow node detection is performed and shield information for the new sub-task of the target operator type in the Flink task may be set for the slow node machine by using the called machine migration function. In this way, after the slow node machine corresponding to the Flink task is detected, the slow node machine can be blocked, so as to ensure that the slow node machine is no longer called to execute the Flink task within the shield duration.

It should be understood that, there is no strict execution sequence between P1 and P2, and P1 and P2 may be synchronously executed or asynchronously executed.

It should be noted that, for the slow node machine, the task related to the shield information is not scheduled to the slow node machine for execution, and the second sub-task that runs slowly in the slow node machine is migrated to an alternative computing node for execution, but the task of another engine type that is already being executed by the slow node machine (the task other than the second sub-task) is not affected, and the task can still be executed by the slow node machine before the slow node machine is offline.

P3: creating, by using the applied target resource, an alternative computing node configured to replace the target computing node, and executing the second sub-task associated with the target computing node by using the alternative computing node.

During specific implementation, after the target resource is successfully pre-applied, when a new machine is online, by using the invoked machine migration function, the applied target resource is used to create respective alternative computing nodes used to replace respective target computing nodes in the newly online machine. In addition, the alternative computing node may be used, based on the failover mechanism of the Flink engine, to resume execution of the second sub-task related to the target computing node, and the alternative computing node may also be used to execute a new sub-task of the target operator type. In addition, each target computing node in the slow node machine may also be released. The specific release step may be as follows: a resource release interface developed on the target computing node (the TM or container) is used to request a JM terminal that manages the TM, so as to implement resource release for the target computing node by the TM.

In this way, not only the entire machine migration process can be asynchronously executed in a service cluster by using the service migration interface, but also the TM resource in a machine that needs to be migrated can be pre-applied in a manner of pre-applying for the target resource, and finally the failover mechanism and the pre-applied target resource are used. The speed of machine migration may be usually second-leveled, so that the speed and stability of slow node migration are greatly improved, and the efficiency of resolving the slow node problem is improved.

Optionally, after the machine migration function is called by using the service migration interface, the shield information may alternatively be not set, and resource pre-application may not be performed, but the machine migration work is directly carried out, so as to migrate the second sub-task that runs slowly into the new machine for running. The specific process may be as follows: when the new machine is online, the target resource is applied for in the new machine by using the machine migration function, and an alternative execution node is created based on the applied target resource, and then execution of the second sub-task related to the target computing node is resumed based on the failover mechanism, and the new sub-task of the target operator type is executed. In addition, after machine migration is completed, the JM terminal that manages the TM may be requested by using the resource release interface, so as to implement resource release of the target computing node by the JM. In this way, when the technical means of setting the shield information and resource pre-application are not used, the second sub-task run by the slow node machine can be migrated to the new machine for execution by using the machine migration function, so as to resolve the slow node problem. In addition, if setting the shield information and resource pre-application are used as auxiliary means in the process of using the machine migration function for machine migration, the migration efficiency and the migration effect can be further improved.

Fig. 4 is a schematic diagram of interaction of a slow node detection method provided by an embodiment of the present disclosure. Fig. 4 illustrates three different types of Flink tasks, and the resource cluster may be K8s cluster or Yarn cluster. The service cluster of each Flink task can report the running indicator information generated in the process of executing the Flink task to the indicator database for storage. Specifically, the slow node automatic detection service may obtain the running indicator information of the to-be-detected Flink task from the indicator database. Then, slow node analysis may be performed based on the running indicator information, so as to determine the slow node machine with the slow node problem. The slow node analysis may include: 1. determining the second sub-task that runs slowly by using the abnormal value filtering algorithm; and 2. determining the slow node machine based on machine aggregation. For the specific implementation process of the steps of slow node analysis, reference can be made to the foregoing embodiments. After the slow node machine is obtained, shield operation and migration operation may be performed, where the shield operation may be generating the shield information for the slow node machine, and the migration operation may be performing migration of the slow node machine based on the pre-applied target resource and the failover mechanism. The shield operation is used to ensure that the Flink task is not scheduled to the slow node machine for execution within short time; and the pre-applied target resource is used to optimize the migration work, so as to improve the migration speed. Optionally, the slow node machine may alternatively be migrated when the target resource is not pre-applied for, and/or, when the shield information is not set. For specific implementation processes of the shield operation and migration operation, reference may be made to the foregoing steps P1 to P3, and details are not described herein again.

A person skilled in the art may understand that, in the foregoing methods of specific implementations, the order in which the steps are written does not means a strict order of execution, and does not constitute any limitation on the implementation process, and the specific order of execution of the steps should be determined by functions and possible internal logic of the steps.

Based on a same concept, an embodiment of the present disclosure further provides a slow node detection apparatus during task running corresponding to the slow node detection method during task running. Because the apparatus in the embodiments of the present disclosure resolves the problem in a principle similar to that of the foregoing slow node detection method in the embodiments of the present disclosure, for the implementation of the apparatus, reference may be made to the implementation of the method, and details are not described again.

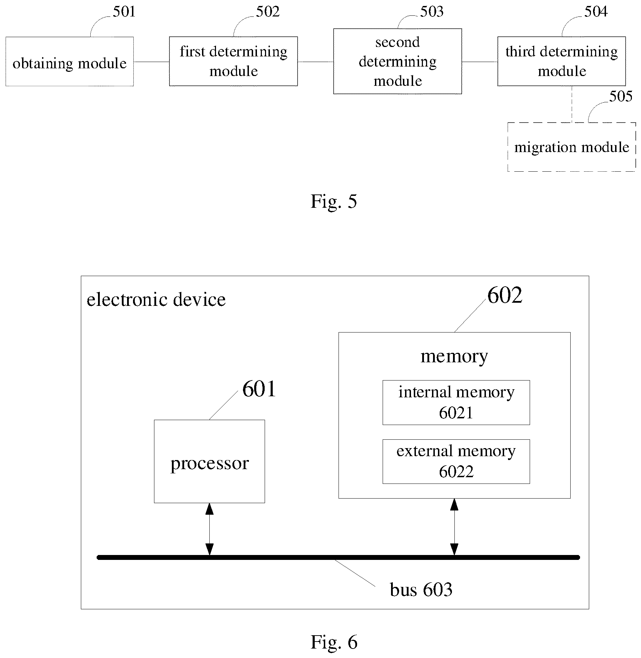

Fig. 5 is a schematic diagram of a slow node detection apparatus during task running provide by an embodiment of the present disclosure. The slow node detection apparatus includes:
an obtaining module 501, configured to obtain running indicator information of a streaming data processing task, where the streaming data processing task includes sub-tasks of a plurality of operator types;
a first determining module 502, configured to determine a target operator type that is abnormal according to a topological relationship between respective operator types and abnormality reason information that is indicated by the running indicator information;
a second determining module 503, configured to filter first sub-tasks of the target operator type from the sub-tasks of the plurality of operator types, and determine, from the running indicator information, to-be-detected indicator information respectively corresponding to the first sub-tasks; and
a third determining module 504, configured to determine, by using the to-be-detected indicator information, a second sub-task that runs slowly from the first sub-tasks, and determine a slow node machine according to an execution machine on which a computing node that executes the second sub-task is located.

In a possible implementation, the apparatus further includes:
a migration module 505, configured to: after the slow node machine is determined,
according to resource amounts required for respective target computing nodes used for executing the second sub-task in the slow node machine, apply for a target resource for each target computing node in advance by using a service migration interface that is preset;
set shield information for the slow node machine, where the shield information is used to indicate that a new sub-task of the target operator type is unable to be scheduled to a computing node in the slow node machine for execution; and
create, by using the target resource that is applied, an alternative computing node used for replacing the target computing node, and execute the second sub-task associated with the target computing node by using the alternative computing node.

In a possible implementation, when determining the slow node machine according to the execution machine on which the computing node that executes the second sub-task is located, the third determining module 504 is configured to:
in response to a target quantity of second sub-tasks being greater than a preset quantity, determine, according to execution machines on which computing nodes that execute the second sub-tasks are located, task quantities corresponding to the execution machines; and
determine the slow node machine according to first ratios of the task quantities corresponding to the execution machines to the target quantity respectively.

In a possible implementation, when determining the slow node machine according to the first ratios of the task quantities corresponding to the execution machines to the target quantity, the third determining module 504 is configured to:
in response to there being a target ratio greater than or equal to a first preset ratio, take an execution machine corresponding to the target ratio as the slow node machine; or
in response to each of the first ratios being less than the first preset ratio, take an execution machine corresponding to a second sub-task with a highest indicator abnormality degree according to indicator abnormality degrees indicated by the to-be-detected indicator information of each second sub-task as the slow node machine.

In a possible implementation, when determining the task quantity corresponding to each execution machine according to the execution machines on which the computing nodes that execute the second sub-tasks are located, the third determining module 504 is configured to:
in response to the target operator type being a data consumption type, determine, according to data partitions on which the second sub-tasks rely to read data from a message queue, data lag time corresponding to each data partition from the to-be-detected indicator information corresponding to the second sub-tasks;
filter a plurality of target data partitions from the data partitions according to the data lag time;
determine, according to data management servers to which the target data partitions belong, data partition quantities corresponding to the data management servers; and
in response to second ratios of the data partition quantities corresponding to the data management servers to a first quantity of the target data partitions being all less than a second preset ratio, determine, according to the execution machines on which the computing nodes that execute the second sub-tasks are located, the task quantities corresponding to the execution machines.

In a possible implementation, when determining the second sub-task that runs slowly from the first sub-tasks based on the to-be-detected indicator information, the third determining module 504 is configured to:
in response to the target operator type being a data consumption type, determine, according to data partitions on which the first sub-tasks rely to read data from a message queue, data lag time corresponding to each data partition from the to-be-detected indicator information corresponding to the first sub-tasks;
determine, according to the data lag time, a second quantity of data partitions whose data lag time is greater than preset time; and
in response to a third ratio of the second quantity to a total quantity of partitions being less than a third preset ratio, determine the second sub-task from the first sub-tasks according to the data lag time corresponding to the data partition, where the total quantity of the partitions is a total quantity of the data partitions on which the first sub-tasks rely.

In a possible implementation, when determining the second sub-task from the first sub-tasks according to the data lag time corresponding to the data partition, the third determining module 504 is configured to:
determine, according to the data lag time corresponding to the data partition, whether there is a to-be-filtered data partition whose data lag time meets a first abnormality condition among the data partitions; and
in response to there being the to-be-filtered data partition, determine the second sub-task according to queries-per-second of a first sub-task that relies on the to-be-filtered data partition.

In a possible implementation, when determining the second sub-task that runs slowly from the first sub-tasks based on the to-be-detected indicator information, the third determining module 504 is configured to:
in response to the target operator type being another operator type other than a data consumption type, determine, according to task idle degrees indicated by the to-be-detected indicator information of the first sub-tasks, whether there is a third sub-task whose task idle degree meets a second abnormality condition; and
in response to there being the third sub-task, determine the second sub-task according to queries-per-second and a preset query rate of the third sub-task.

Reference may be made to related descriptions in the foregoing method embodiments for descriptions of processing procedures of the modules in the apparatus as well as procedures of interactions between the modules.

Based on a same technical concept, an embodiment of the present disclosure further provides an electronic device. Fig. 6 is a schematic structural diagram of an electronic device provided by an embodiment of the present disclosure.

The electronic device includes a processor 601, a memory 602, and a bus 603. The memory 602 stores machine-readable instructions that can be executed by the processor 601, and the processor 601 is configured to execute the machine-readable instructions stored in the memory 602. When the machine-readable instructions are executed by the processor 601, the processor 601 performs the following steps: S101: obtaining running indicator information of a streaming data processing task, where the streaming data processing task includes sub-tasks of a plurality of operator types; S102: determining a target operator type that is abnormal according to a topological relationship between respective operator types and abnormality reason information that is indicated by the running indicator information; S103: filtering first sub-tasks of the target operator type from the sub-tasks of the plurality of operator types, and determining, from the running indicator information, to-be-detected indicator information respectively corresponding to the first sub-tasks; and S104: determining, by using the to-be-detected indicator information, a second sub-task that runs slowly from the first sub-tasks, and determine a slow node machine according to an execution machine on which a computing node that executes the second sub-task is located.

The memory 602 includes an internal memory 6021 and an external memory 6022. The internal memory 6021 herein is also referred to as inner memory, and is configured to transitorily store operational data in the processor 601 and data exchanged with the external memory 6022 such as a hard disk. The processor 601 exchanges data with the external memory 6022 by using the internal memory 6021. When the electronic device runs, the processor 601 communicates with the memory 602 through the bus 603, so that the processor 601 executes the instructions in the foregoing method embodiments.

An embodiment of the present disclosure further provides a non-transitory computer-readable storage medium, where the computer-readable storage medium stores a computer program, and when the computer program is run by a processor, the steps of the slow node detection method during task running in the forgoing method embodiments are performed. The storage medium may be a volatile or non-volatile computer-readable storage medium.

A computer program product of the slow node detection method during task running provided by an embodiment of the present disclosure includes a computer-readable storage medium storing program code, where the instructions included in the program codes are used to execute the steps of the slow node detection method during task running in the foregoing method embodiments. For details, reference may be made to the foregoing method embodiments, and details are not described herein again.

This computer program product can be specifically implemented through hardware, software, or a combination thereof. In an alternative embodiment, the computer program product is embodied as a computer storage medium, while in another alternative embodiment, the computer program product is embodied as a software product, such as a software development kit (SDK), etc.

Technicians in the relevant field can clearly understand that, for the sake of convenience and simplicity in description, the specific working process of the system and apparatus described above can refer to the corresponding process in the aforementioned method embodiments, which will not be repeated here. In the several embodiments provided in this disclosure, it should be understood that the disclosed systems, apparatus, and methods can be implemented in other ways. The above described embodiments of the apparatus and device are only illustrative. For example, the division of units or modules is only a logical function division, and there may be other division manners in actual implementation. For example, multiple units or components can be combined or integrated into another system, or some features can be ignored or not executed. On the other hand, the mutual coupling or direct coupling or communication connection displayed or discussed can be indirect coupling or communication connection through some communication interfaces, devices or units, which can be electrical, mechanical or other forms.

The unit or module described as separate component may be or may not be physically separated, and the components displayed as units may be or may not be physical units, i.e. they can be located in one place or distributed across multiple network units. Some or all of the units can be selected according to actual needs to achieve the purpose of the embodiments.

In addition, the various functional units in the embodiments of the present disclosure can be integrated into one processing unit, or physically exist separately, or integrate two or more units into one unit.

If the functions are implemented in the form of software functional units and sold or used as independent products, they can be stored in a processor executable non-volatile computer-readable storage medium. Based on this understanding, the disclosed technical solution essentially or the portions contributing to the existing technology or the portions of the technical solutions can be embodied in the form of a software product. The computer software product is stored in a storage medium and includes several instructions to enable an electronic device (which can be a personal computer, a server, or a network device, etc.) to perform all or part of the steps of the methods described in various embodiments of the present disclosure. The aforementioned storage media include various media that can store program codes, such as USB flash drives, mobile hard disk, read-only memory (ROM), random access memory (RAM), magnetic disks, optical disks, or the like.

If the technical solutions of the present disclosure involve personal information, the product applying the technical solutions of the present disclosure has clearly informed the personal information processing rules and obtained the individual's independent consent before processing the personal information. If the technical solutions of the present disclosure involve sensitive personal information, the product applying the technical solutions of the present disclosure has obtained individual's independent consent and meets the requirement of "explicit consent" before processing the sensitive personal information. For example, at personal information collection devices such as cameras, clear and prominent signs should be set up to indicate that this is the personal information collection region and personal information will be collected, and if an individual voluntarily enters the collection range, it will be deemed as agreeing to the collection of their personal information. Alternatively, on personal information processing devices, with clear identification/information informing personal information processing rules, individual authorization can be obtained through pop-up messages or by asking individuals to upload their personal information themselves. The personal information processing rules may include information such as personal information processors, personal information processing purposes, processing methods, types of personal information processed, or the like.

Finally, it should be noted that the above embodiments are only specific implementations of the present disclosure, which are used to illustrate the technical solutions of the present disclosure, and do not limit the present disclosure. The scope of protection of the present disclosure is not limited to this. Although the present disclosure is described in detail with reference to the aforementioned embodiments, ordinary technician in this field should understand that: any technician familiar with this technical field can still modify or easily think of changes to the technical solutions described in the aforementioned embodiments or equivalently replace some of the technical features within the technical scope disclosed by this disclosure; these modifications, changes, or substitutions do not deviate from the essence and scope of the corresponding technical solutions disclosed in this disclosure, and should be covered within the scope of protection of this disclosure. Therefore, the scope of protection of this disclosure should be based on the scope of protection of the claims.

## Claims

1. A slow node detection method during task running, comprising:
obtaining running indicator information of a streaming data processing task, wherein the streaming data processing task comprises sub-tasks of a plurality of operator types;
determining a target operator type that is abnormal according to a topological relationship between respective operator types and abnormality reason information that is indicated by the running indicator information;
filtering first sub-tasks of the target operator type from the sub-tasks of the plurality of operator types, and determining, from the running indicator information, to-be-detected indicator information respectively corresponding to the first sub-tasks; and
determining, by using the to-be-detected indicator information, a second sub-task that runs slowly from the first sub-tasks, and determining a slow node machine according to an execution machine on which a computing node that executes the second sub-task is located.

2. The method according to claim 1, wherein, after determining the slow node machine, the method further comprises:
according to resource amounts required for respective target computing nodes used for executing the second sub-task in the slow node machine, applying for a target resource for each target computing node in advance by using a service migration interface that is preset;
setting shield information for the slow node machine, wherein the shield information is used to indicate that a new sub-task of the target operator type is unable to be scheduled to a computing node in the slow node machine for execution; and
creating, by using the target resource that is applied, an alternative computing node used for replacing the target computing node, and executing the second sub-task associated with the target computing node by using the alternative computing node.

3. The method according to claim 1, wherein determining the slow node machine according to the execution machine on which the computing node that executes the second sub-task is located comprises:
in response to a target quantity of second sub-tasks being greater than a preset quantity, determining, according to execution machines on which computing nodes that execute the second sub-tasks are located, task quantities corresponding to the execution machines; and
determining the slow node machine according to first ratios of the task quantities corresponding to the execution machines to the target quantity respectively.

4. The method according to claim 3, wherein determining the slow node machine according to the first ratios of the task quantities corresponding to the execution machines to the target quantity respectively comprises:
in response to there being a target ratio greater than or equal to a first preset ratio, taking an execution machine corresponding to the target ratio as the slow node machine; or
in response to each of the first ratios being less than the first preset ratio, taking an execution machine corresponding to a second sub-task with a highest indicator abnormality degree according to indicator abnormality degrees indicated by the to-be-detected indicator information of each second sub-task as the slow node machine.

5. The method according to claim 3, wherein determining, according to the execution machines on which the computing nodes that execute the second sub-tasks are located, the task quantities corresponding to the execution machines, comprises:
in response to the target operator type being a data consumption type, determining, according to data partitions on which the second sub-tasks rely to read data from a message queue, data lag time corresponding to each data partition from the to-be-detected indicator information corresponding to the second sub-tasks;
filtering a plurality of target data partitions from the data partitions according to the data lag time;
determining, according to data management servers to which the target data partitions belong, data partition quantities corresponding to the data management servers; and
in response to second ratios of the data partition quantities corresponding to the data management servers to a first quantity of the target data partitions being all less than a second preset ratio, determining, according to the execution machines on which the computing nodes that execute the second sub-tasks are located, the task quantities corresponding to the execution machines.

6. The method according to claim 1, wherein determining, by using the to-be-detected indicator information, the second sub-task that runs slowly from the first sub-tasks, comprises:
in response to the target operator type being a data consumption type, determining, according to data partitions on which the first sub-tasks rely to read data from a message queue, data lag time corresponding to each data partition from the to-be-detected indicator information corresponding to the first sub-tasks;
determining, according to the data lag time, a second quantity of data partitions whose data lag time is greater than preset time; and
in response to a third ratio of the second quantity to a total quantity of partitions being less than a third preset ratio, determining the second sub-task from the first sub-tasks according to the data lag time corresponding to the data partition, wherein the total quantity of the partitions is a total quantity of the data partitions on which the first sub-tasks rely.

7. The method according to claim 6, wherein determining the second sub-task from the first sub-tasks according to the data lag time corresponding to the data partition comprises:
determining, according to the data lag time corresponding to the data partition, whether there is a to-be-filtered data partition whose data lag time meets a first abnormality condition among the data partitions; and
in response to there being the to-be-filtered data partition, determining the second sub-task according to queries-per-second of a first sub-task that relies on the to-be-filtered data partition.

8. The method according to claim 1, wherein determining, by using the to-be-detected indicator information, the second sub-task that runs slowly, comprises:
in response to the target operator type being another operator type other than a data consumption type, determining, according to task idle degrees indicated by the to-be-detected indicator information of the first sub-tasks, whether there is a third sub-task whose task idle degree meets a second abnormality condition; and
in response to there being the third sub-task, determining the second sub-task according to queries-per-second and a preset query rate of the third sub-task.

9. A slow node detection apparatus during task running, comprising:
an obtaining module, configured to obtain running indicator information of a streaming data processing task, wherein the streaming data processing task comprises sub-tasks of a plurality of operator types;
a first determining module, configured to determine a target operator type that is abnormal according to a topological relationship between respective operator types and abnormality reason information that is indicated by the running indicator information;
a second determining module, configured to filter first sub-tasks of the target operator type from the sub-tasks of the plurality of operator types, and determine, from the running indicator information, to-be-detected indicator information respectively corresponding to the first sub-tasks; and
a third determining module, configured to determine, by using the to-be-detected indicator information, a second sub-task that runs slowly from the first sub-tasks, and determine a slow node machine according to an execution machine on which a computing node that executes the second sub-task is located.

10. An electronic device, comprising: a processor and a memory, wherein the memory stores a machine-readable instruction that is capable of being executed by the processor, the processor is configured to execute the machine-readable instruction stored in the memory, and when the machine-readable instruction is executed by the processor, the processor performs the slow node detection method during task running according to any one of claims 1 to 8.

11. A non-transitory computer-readable storage medium, wherein the non-transitory computer-readable storage medium stores a computer program, and when the computer program is run by an electronic device, the electronic device performs the slow node detection method during task running according to any one of claims 1 to 8.
